# NEUE EUROPÄISCHE PATENTSCHRIFT

(11) **EP 1 807 289 B2**
(45) Veröffentlichungstag und Bekanntmachung des Hinweises auf die Entscheidung über den Einspruch: **12.02.2014**
(45) Hinweis auf die Patenterteilung: 27.08.2008
(21) Anmeldenummer: 05801653.6
(22) Anmeldetag: 02.11.2005
(51) Int. Cl.: B60R 25/02

(54) **LENKSCHLOSS**
STEERING LOCK
ANTIVOL DE DIRECTION

(30) Priorität: 05.11.2004 DE 102004053438
(43) Veröffentlichungstag der Anmeldung: 18.07.2007
(73) Patentinhaber: Valeo Sicherheitssysteme GmbH, 85253 Erdweg (DE)
(72) Erfinder: LAVAL, Anthony c/o VALEO SECURITE HABITACLE, Europarc F-94042 Créteil Cedex (FR); STARKEN, Harald c/o VALEO SECURITE HABITACLE, Europarc F-94042 Créteil Cedex (DE)
(74) Vertreter: Larger, Solène
(86) Internationale Anmeldenummer: PCT/EP2005/055704
(87) Internationale Veröffentlichungsnummer: WO 2006/048423

(56) Entgegenhaltungen:
- EP-A- 1 176 065
- EP-A- 1 486 386
- EP-A1- 1 232 921
- EP-A1- 1 435 314
- EP-A1- 1 637 415
- EP-A2- 1 078 829
- EP-A2- 1 174 314
- WO-A-2004/098960
- WO-A1-03/080407
- WO-A1-2004/098959
- DE-A1- 10 022 831
- DE-A1- 10 041 018
- DE-A1- 10 133 408
- DE-B3- 10 247 802
- DE-C2- 10 061 960
- DE-T2- 60 101 810
- US-A1- 2004 031 299

## Beschreibung

Die Erfindung betrifft ein Lenkschloß zur Verriegelung der Lenkspindel einer Lenkeinrichtung eines Kraftfahrzeuges.

Ein derartiges Lenkschloß ist beispielsweise aus der DE 199 64 173 C2 bekannt. Dabei umfaßt das Lenkschloß ein in Richtung seiner Längsachse verschiebbares Sperrelement, welches von der Ver- in eine Entriegelungsstellung mittels eines elektromechanischen Antriebes betätigbar und in der Entriegelungsstellung durch ein Sicherungselement sicherbar ist. Bei dem elektromechanischen Antrieb handelt es sich um einen Spindelantrieb. Die Ansteuerung des Sicherungselementes zur Freigabe des Sperrelementes, wenn dieses von seiner Entriegelungs- in seine Verriegelungsstellung verschoben werden soll, erfolgt mittels eines Steuernockens, der sich an einer Steuerkontur der Gewindespindel abstützt, die sich auf der dem Sperrelement abgewandten Seite der Gewindespindel befindet. Aufgrund des großen Abstandes zwischen der Steuerkontur und dem Sperrelement ist bei diesem bekannten Lenkschloß eine platzaufwendige Hebeleinrichtung erforderlich.

Aus der DE 199 29 435 A1 ist ein Lenkschloß bekannt, bei dem als elektromechanischer Antrieb ein Schneckenantrieb verwendet wird, wobei das Schneckenrad des Antriebes ein mit dem Sperrelement axial verbundenes Hubglied koaxial umfaßt, so daß die Achse des Schneckenrades und des Sperrelementes zusammenfallen. Eine Sicherung des Sperrbolzens in seiner Entriegelungsstellung ist nicht vorgesehen, so daß z.B. bei einer Beschädigung des Schneckenrades eine sicherheitsbedenkliche Situation auftreten kann (Verschiebung des Sperrelementes in die Verriegelungsstellung während der Fahrt). Ein gattungsbildendes Lenkschloss ist aus der EP 1 178 065 A bekannt.

Der Erfindung liegt die Aufgabe zugrunde, ein pletesparendes Lenkschloß der eingangs erwähnten Art anzugeben, bei welchem das Sperrelement in seiner Entriegelungsstellung auf einfache Weise durch ein Sicherungselement sicherbar ist, auch wenn es sich bei dem die Verschiebung des Sperrelementes bewirkenden elektromechanischen Antrieb um einen Schneckenantrieb handelt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, ein mit einer ersten Steuerkontur versehenes Antriebsrad, vorzugsweise das Schneckenrad eines Schneckenantriebes, zu verwenden, an der ein erster Nocken zur Verschiebung des Sperrelementes in seine Entriegelungsstellung angeordnet ist. An dieser ersten Steuerkontur -oder an einer separaten, ebenfalls an dem Antriebsrad angeordneten zweiten Steuerkontur- ist ein zweiter Nocken zur Betätigung des Sicherungselementes abstützbar anordbar, derart, daß nach Aktivierung des elektromechanischen Antriebes aber vor der Verschiebung des Sperrelementes von der Entriegelungsstellung in die Verriegelungsstellung zunächst das in ihrer Ruhestellung befindliche Sicherungselement in ihre Freigabestellung geschwenkt wird und erst anschließend die erste Steuerkontur eine Bewegung des ersten Nockens, und damit des Sperrelementes, in die verriegelte Stellung erlaubt.

Die Schwenkachse des Sicherungselementes ist parallel zur Drehachse des Antriebsrades angeordnet, und das Sicherungselement weist an seinem einen Ende zur Sicherung des Sperrelementes in der Entriegelungsstellung einen im wesentlichen L-förmigen Schenkel als Sperrteil auf, welcher unter einen absatzförmigen Vorsprung des Sperrelementes schwenkbar ist.

Bei einer weiteren Ausführungsform der Erfindung umfaßt das Sperrelement ein bolzenförmiges Unterteil und ein sich an das Unterteil anschließendes im wesentliches bügelförmiges Oberteil, wobei mindestens ein Teilbereich des dem bolzenförmigen Unterteil gegenüberliegenden Arm des Oberteiles als erster Steuernocken ausgebildet ist.

Als vorteilhaft hat es sich erwiesen, wenn die erste Steuerkontur des Antriebsrades zwei Kurvenabschnitte aufweist, wobei der erste Kurvenabschnitt einen konstanten radialen Abstand von der Drehachse des Antriebsrades besitzt und der zweite Kurvenabschnitt einen von dem ersten Abschnitt zur Drehachse des Antriebsrades hin ab-fallenden Verlauf aufweist. Dabei ist der radiale Abstand zwischen dem ersten Kurvenabschnitt und der Drehachse des Antriebsrades derart gewählt, daß bei Abstützung des ersten Nockens an diesem Kurvenabschnitt das Sperrelement seine Entriegelungsstellung erreicht hat. Außerdem ist die in Umfangsrichtung sich ergebende Länge dieses Kurvenabschnittes derart gewählt, daß sich bei dem Verriegelungsvorgang der erste Nocken so lange an dem ersten Kurvenabschnitt abstützt, bis der zweite Nocken das Sicherungselement von seiner Ruhestellung in seine Freigabestellung geschwenkt hat.

Um beim Beginn des Entriegelungsvorganges möglichst große Kräfte zur Verschiebung des Sperrelementes zur Verfügung zu haben, hat es sich ferner als vorteilhaft erwiesen, wenn bei Verwendung eines Antriebsrades, bei dem die Krafteinleitung in das Antriebsrad randseitig erfolgt (Zahnradantrieb), der zweite Kurvenabschnitt sich bis in die unmittelbare Nähe der Drehachse des Antriebsrades erstreckt.

Weitere Einzelheiten und Vorteile der Erfindung ergeben sich aus den folgenden anhand von Figuren erläuterten Ausführungsbeispielen, wobei die Figuren 1 bis 4 nicht die Erfindung darstellen. Es zeigen:

Fig.1 die Seitenansicht eines schematisch dargestellten Lenkschlosses in seinem entriegelten und gesicherten Zustand, wobei der erste und der zweite Nocken an der gleichen Steuerkontur abstützbar angeordnet sind;

Fig.2 eine vergrößerte Seitenansicht eines in Fig.1 mit II bezeichneten Teilbereiches des Lenkschlosses;

Fig.3 das Fig.1 entsprechende Lenkschloß während der Verriegelungsphase;

Fig.4 das Fig.1 entsprechende Lenkschloß in seiner verriegelten Stellung;

Fig.5 und 6 die perspektivische Ansichten eines erfindungsgemäßen Ausführungsbeispieles eines schematisch dargestellten Lenkschlosses in seinem entriegelten und gesicherten Zustand, wobei der erste und der zweite Nocken an unterschiedlichen Steuerkonturen abstützbar angeordnet sind.

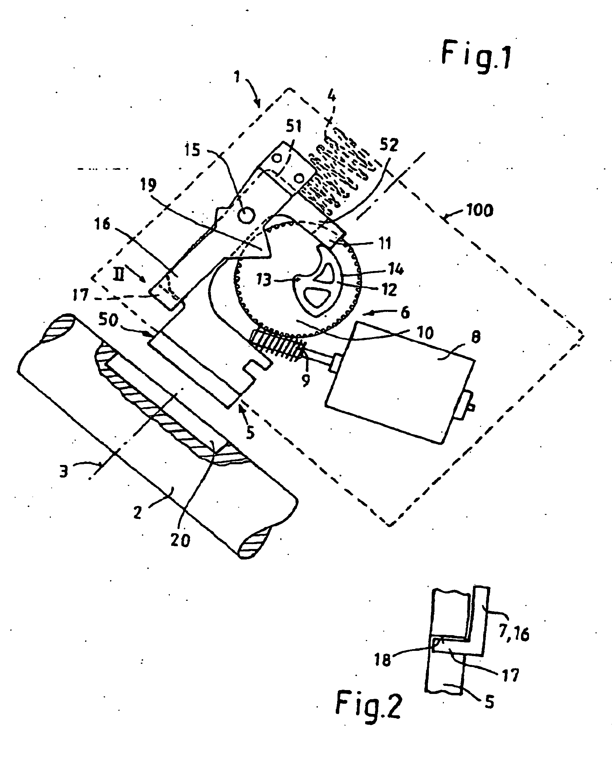

In Fig.1 ist mit 1 ein Lenkschloß zur Verriegelung einer Lenkspindel 2 eines Kraftfahrzeuges bezeichnet. Das Lenkschloß 1 umfaßt ein nur gestrichelt angedeutetes Gehäuse 100 sowie ein in Richtung seiner Längsachse 3 durch eine Feder 4 verschiebbares Sperrelement 5, welches mittels eines elektrome-chanischen Schneckenantriebes 6 von einer Ver- in eine Entriegelungsstellung betätigbar und in der Entriegelungsstellung durch ein federbeaufschlagtes hebelförmiges Sicherungselement 7 sicherbar ist.

Der Schneckenantrieb 6 besteht im wesentlichen aus einem Elektromotor 8, auf dessen Abtriebswelle eine Schnecke 9 angeordnet ist, die ihrerseits in die Zähne eines in einer Ausgangsstellung befindlichen Schneckenrades 10 eingreift.

Das Sperrelement 5 umfaßt ein bolzenförmiges Unterteil 50 und ein sich an das Unterteil 50 anschließendes bügelförmiges Oberteil 51, wobei mindestens ein Teilbereich des dem bolzenförmigen Unterteil 50 gegenüberliegenden Armes 52 des Oberteiles 51 als erster Nocken 11 ausgebildet ist. Das Sperrelement 5 stützt sich über den ersten Nocken 11 an einer ersten Steuerkontur 12 des Schneckenrades 10 ab, dessen Drehachse 13 senkrecht zur Längsachse 3 des Sperrelementes 5 angeordnet ist.

In Fig.1 befindet sich das Sperrelement 5 in seiner Entriegelungsstellung, und der erste Nocken 11 stützt sich deshalb an einem ersten Kurvenabschnitt 14 der ersten Steuerkontur 12 ab, der einen maximalen radialen Abstand von der Drehachse 13 des Schneckenrades 10 aufweist. Außerdem wird das Sperrelement 5 in dieser Stellung durch das in seiner Ruhestellung befindliche Sicherungselement 7 gesichert.

Das Sicherungselement 7 ist als Hebel ausgebildet, der um eine zur Drehachse 13 des Schneckenrades 10 parallele Schwenkachse 15 schwenkbar ist. Dabei ist das untere Ende 16 des Sicherungselementes 7 L-förmig ausgebildet, wobei der waagerechte Schenkel 17 ein Sperrteil bildet, das unter einen absatzförmigen Vorsprung 18 des Sperrelementes 5 geschwenkt ist (Fig.2). Das Sicherungselement 7 wird in dieser Ruhestellung durch eine nicht dargestellte Feder gehalten.

An dem Sicherungselement 7 ist außerdem ein zweiter Nocken 19 angeordnet, welcher sich im Falle der in Fig.1 dargestellten Verriegelungsstellung des Sperrelementes 5 nicht an der ersten Steuerkontur 12 des Schneckenrades 10 abstützt.

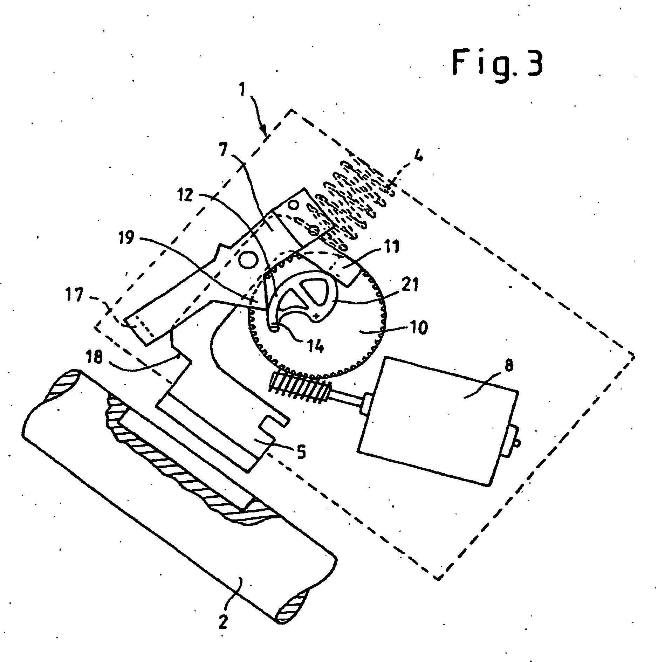

Soll das Sperrelement 5 in seine Verriegelungsstellung verschoben, d.h. in eine nutenförmige Ausnehmung 20 der Lenkspindel 2 eingeschoben, werden, so wird der Elektromotor 8 aktiviert. Die Schnecke 9 treibt dann das Schneckenrad 10 an, welches sich von seiner in Fig.1 dargestellten Ausgangsstellung entgegen dem Uhrzeigersinn dreht. Dabei verbleibt das Sperrelement 5 zunächst so lange in seiner Ausgangslage, bis der erste Kurvenabschnitt 14 der ersten Steuerkontur 12 den zweiten Nocken 19 erreicht und das Sicherungselement 7 nach außen schwenkt, so daß das Sperrteil 17 des Sicherungselementes 7 das Sperrelement 5 freigibt (Fig.3).

Beim Weiterdrehen des Schneckenrades 10 stützt sich der zweite Nocken 19 zunächst weiter an dem ersten Kurvenabschnitt 14 der ersten Steuerkontur 12 ab, während sich der erste Nocken 11 des Sperrelementes 5 an einem bis in die Nähe der Drehachse 13 des Schneckenrades 10 abfallenden zweiten Kurvenabschnitt 21 der ersten Steuerkontur 12 abstützt und durch die Feder 4 in die nutenförmige Ausnehmung 20 der Lenkspindel 2 gedrückt wird.

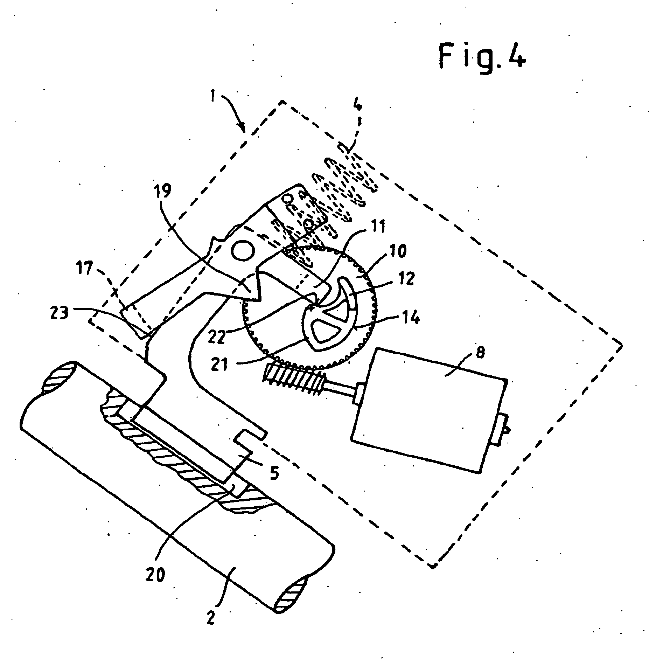

Nachdem das Sperrelement 5 seine Verriegelungsstellung erreicht hat, dreht sich das Schneckenrad 10 noch so lange weiter, bis es seine Ausgangsstellung wieder erreicht hat. Erst anschließend wird der Elektromotor 8, z.B. mit Hilfe eines entsprechenden Berührungsschalters (nicht dargestellt), abgeschaltet. In dieser Stellung stützt sich der erste Nocken 11 dann an einem Auflagebereich 22 der ersten Steuerkontur 12 ab, der sich in unmittelbarer Nähe der Drehachse 13 des Schneckenrades 10 befindet (Fig.4). Das Sicherungselement 7 wird dabei nicht mehr durch den zweiten Nocken 19, sondern durch den seitlichen Rand 23 des Sperrelementes 5 in seiner ausgeschwenkten Lage gehalten.

Soll die Lenkspindel 2 wieder entriegelt werden, so wird der Elektromotor 8, z.B. beim Einstecken eines Zündschlüssels (nicht dargestellt), aktiviert, derart, daß sich das Schneckenrad 10 nun im Uhrzeigersinn dreht. Durch den relativ großen Abstand zwischen der Krafteinleitung mittels der Schnecke 9 und dem Auflagebereich 22 des ersten Nockens 11 wirkt zunächst eine relativ große Kraft auf den Nocken 11, so daß Klemmkräfte, die gegebenenfalls auf das Sperrelement 5 in seiner verriegelten Stellung wirken, sicher überwunden werden. Der erste Nocken 11 gleitet anschließend entlang des zweiten Kurvenabschnittes 21 nach außen und verschiebt dabei das Sperrelement 5 nach oben. Nachdem der erste Nocken 11 den ersten Kurvenabschnitt 14 erreicht hat, dreht sich das Schneckenrad 10 noch so lange weiter, bis es wiederum die in Fig.1 dargestellte Ausgangsstellung erreicht hat. Anschließend wird der Elektromotor 8 automatisch abgeschaltet.

Statt des Schneckenrades auch kann das Zahnrad eines anderen mit dem Elektromotor verbundenen Getriebes verwendet werden.

Es kann auch vorgesehen sein, daß statt der auf den ersten Nocken wirkenden Feder zur Verschiebung des Sperrelementes ein weiterer mit dem Sperrelement verbundener Nocken oder Mitnehmer vorgesehen ist, über den eine entsprechend ausgebildete Steuerkontur das Sperrelement in seine Verriegelungsstellung drückt (vgl. hierzu beispielsweise auch die DE 100 41 018 A1).

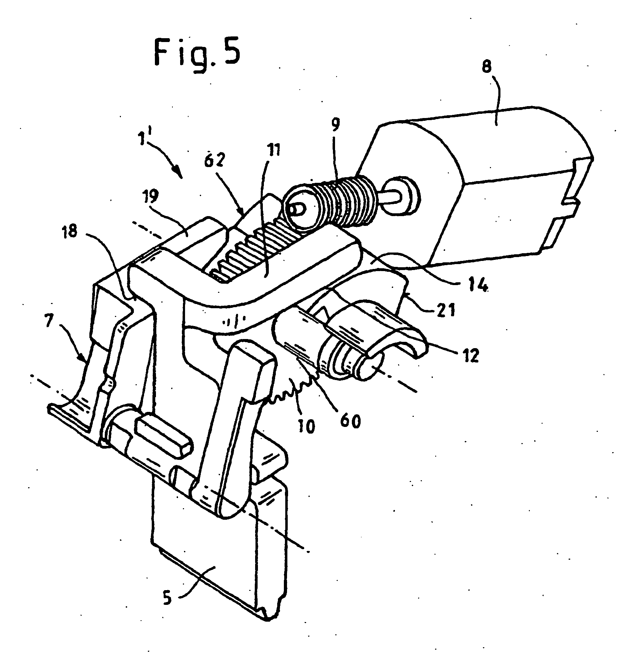

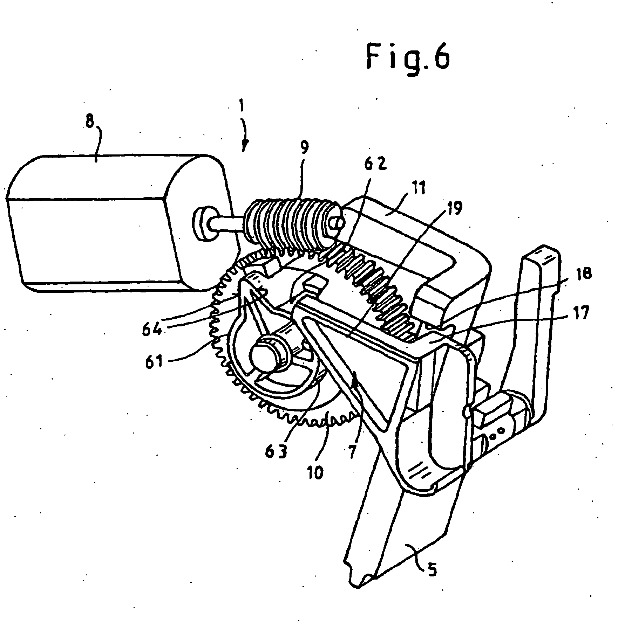

Ferner können der erste und der zweite Nocken 11, 19 auch an unterschiedlichen Steuerkonturen des Antriebsrades 10 abstützbar angeordnet sein. Einen derartigen Lenkschlosse 1' zeigen die Fig. 5 und 6. Dabei sind die Teile, welche die gleiche Funktion haben wie die in dem in den Fig. 1-4 dargestellten Teile, mit den gleichen Bezugszeichen versehen. Aus Gründen einer besseren Übersicht wurden außerdem die in den Fig.1, 3 und 4 gestrichelt angedeuteten Teile weggelassen.

Wie den Fig.5 und 6 entnehmbar ist, befinden sich auf beiden Seiten 60, 61 des Schneckenrades 10 Steuerkonturen 12, 62. An der auf der Seite 60 angeordneten Steuerkontur 12 (Fig.5) stützt sich nur der erste Nocken 11 des Sperrelementes 5 ab. Diese Steuerkontur 12 weist wiederum zwei Kurvenabschnitte 14, 21 auf, die den vorstehend, im Zusammenhang mit dem ersten Ausführungsbeispiel beschriebenen Kurvenabschnitten 14 und 21 entsprechen.

An der auf der gegenüberliegenden Seite 61 des Schneckenrades 10 angeordneten zweiten Steuerkontur 62 (Fig.6) stützt sich der zweite Nocken 19 des Sicherungselementes 7 ab. Diese Steuerkontur 62 setzt sich im wesentlichen auch aus zwei Kurvenabschnitten 63, 64 zusammen. Dabei stützt sich der zweite Nocken 19 in der Ruhestellung des Sicherungselementes 7 (entriegelte und gesicherte Zustand des Sperrelementes 5) an einem ersten Kurvenabschnitt 63 ab, der im wesentlichen einen konstanten radialen Abstand von der Drehachse 13 des Schneckenrades 10 besitzt. Ein zweiter Kurvenabschnitt 64, der die Form einer Spitze aufweist, bewirkt bei Drehung des Schneckenrades 10 ein Verschwenken des Sicherungselementes 7, so daß das Sperrteil 17 bei dem Verriegelungsvorgang des Sperrelementes 5 wiederum von dem absatzförmigen Vorsprung 18 des Sperrelementes 5 weggeschwenkt wird und das Sperrelement 5 freigibt.

### Bezugszeichenliste

- 1,1': Lenkschloß
- 2: Lenkspindel
- 3: Längsachse
- 4: Feder
- 5: Sperrelement
- 6: Antrieb, Schneckenantrieb
- 7: Sicherungselement
- 8: Elektromotor
- 9: Schnecke
- 10: Antriebsrad, Zahnrad, Schneckenrad
- 11: (erster) Nocken
- 12: (erste) Steuerkontur
- 13: Drehachse
- 14: (erster) Kurvenabschnitt
- 15: Schwenkachse
- 16: unteres Ende
- 17: Schenkel, Sperrteil
- 18: Vorsprung
- 19: (zweiter) Nocken
- 20: nutenförmige Ausnehmung
- 21: (zweiter) Kurvenabschnitt
- 22: Auflagebereich
- 23: Rand
- 50: Unterteil
- 51: Oberteil
- 52: Arm
- 60,61: Seiten
- 62: (zweite) Steuerkontur
- 63: (erster) Kurvenabschnitt
- 64: (zweiter) Kurvenabschnitt
- 100: Gehäuse

## Patentansprüche

1. Lenkschloß zur Verriegelung der Lenkspindel (2) einer Lenkeinrichtung eines Kraft-fahrzeuges mit den Merkmalen:
a) das Lenkschloß (1) umfaßt ein in Richtung seiner Längsachse (3) verschiebbares Sperrelement (5), welches mittels eines elektromechanischen Antriebes (6) von einer Ver- in eine Entriegelungsstellung betätigbar und in der Entriegelungsstellung durch ein von einer Ruhestellung in eine Freigabestellung um eine gehäusefeste Schwenkachse (15) verschwenkbares hebelförmiges Sicherungselement (7) sicherbar ist;
b) zur Verschiebung des Sperrelementes (5) stützt sich dieses mindestens Ober einen ersten Nocken (11) an einer ersten Steuerkontur (12) eines Antriebsrades (10) des elektromechanischen Antriebes (6) ab; **dadurch gekennzeichnet, dass**
c) das Sicherungselement (7) ist mit einem zweiten Nocken (19) verbunden, welcher ebenfalls an einer mit dem Antriebsrad (10) verbundenen Steuerkontur (12; 62) abstützbar angeordnet ist, wobei die dem Sicherungselement (7) zugeordnete Steuerkontur (12; 62) einen Verlauf aufweist, der derart gewählt ist, daß nach Aktivierung des elektromechanischen Antriebes (6) zur Verschiebung des Sperrelementes (5) von der Entriegelungsstellung in die Verriegelungsstellung zunächst das Sicherungselement (7) von seiner Ruhestellung in seine Freigabestellung geschwenkt wird und erst anschließend eine Bewegung des Sperrelementes (5) in die verriegelte Stellung möglich ist; wobei die Drehachse (13) des Antriebsrades (10) senkrecht zur Längsachse (3) des Sperrelementes (5) angeordnet ist; wobei der zweite Nocken (19) des Sicherungselementes (7) an einer von der ersten Steuerkontur (12) separat angeordneten zweiten Steuerkontur (62) abstützbar angeordnet ist, wobei die erste Steuerkontur (12) und die zweite Steuerkontur (62) auf den gegenüberliegenden Seiten (60, 61) des Antriebsrades (10) angeordnet sind und wobei das Sicherungselement (7) an seinem einen Ende ein Sperrteil (17) umfaßt, welches durch einen im wesentlichen L-förmigen Schenkel gebildet wird, und wobei das Sperrteil (17) zur Sicherung des Sperrelementes (5) in seiner Entriegelungsstellung unter einen absatzförmigen Vorsprung (18) des Sperrelementes (5) schwenkbar ist.

2. Lenkschloß nach Anspruch 1 **dadurch gekennzeichnet, daß** die Schwenkachse (15) des Sicherungselementes (7) parallel zur Drehachse (13) des Antriebsrades (10) angeordnet ist.

3. Lenkschloß nach einem der Ansprüche 1 oder 2, **dadurch gekennzeichnet,**
**daß** die erste Steuerkontur (12) des Antriebsrades (10) zwei Kurvenabschnitte (14, 21) aufweist, wobei der erste Kurvenabschnitt (14) einen konstanten radialen Abstand von der Drehachse (13) des Antriebsrades (10) besitzt und der zweite Kurvenabschnitt (21) einen von dem ersten Kurvenabschnitt (14) zur Drehachse (13) des Antriebsrades (10) hin abfellenden Verlauf aufweist, und
**daß** der radiale Abstand des ersten Kurvenabschnittes (14) derart gewählt ist, daß bei Abstützung des ersten Nockens (11) an diesem Kurvenabschnitt (14) das Sperrelement (5) seine Entriegelungsstellung erreicht hat und daß die Länge dieses Kurvenabschnittes (14) derart gewählt ist, daß sich bei dem Verriegelungsvorgang der erste Nocken (11) so lange an dem Kurvenabschnitt (14) abstützt, bis der zweite Nocken (19) das Sicherungselement (7) von seiner Ruhestellung in seine Freigabestellung geschwenkt hat.

4. Lenkschloß nach Anspruch 3, **dadurch gekennzeichnet, daß** der zweite Kurvenabschnitt (21) sich bis in die unmittelbare Nähe der Drehachse (13) des Antriebsrades (10) erstreckt.

5. Lenkschloß nach Anspruch 3, **dadurch gekennzeichnet, daß** die zweite Steuerkontur (62) des Antriebsrades (10) einen zweiten Kurvenabschnitt (64) aufweist, welcher derart ausgebildet ist, daß bei Abstützung des zweiten Nocken (19) an diesem Kurvenabschnitt (64) das Sicherungselement (7) von seiner Ruhestellung in seine Freigabestellung geschwenkt wird.

6. Lenkschloß nach einem der Ansprüche 1 bis 5, **dadurch gekennzeichnet, daß** das Sperrelement (5) ein bolzenförmiges Unterteil (50) und ein sich an das Unterteil (50) anschließendes im wesentlichen bügelförmiges Oberteil (51) umfaßt, wobei mindestens ein Teilbereich des dem bolzenförmigen Unterteil (50) gegenüberliegenden Arm (52) des Oberteiles (51) als erster Nocken (11) ausgebildet ist.

7. Lenkschloß nach einem der Ansprüche 1 bis 6, **dadurch gekennzeichnet, daß** es sich bei dem Antriebsrad (10) um ein Zahnrad des elektromechanischen Antriebes (6) handelt.

8. Lenkschloß nach Anspruch 7, **dadurch gekennzeichnet, daß** es sich bei dem Zahnrad (10) um das Schneckenrad eines Schneckenradantriebes handelt.

## Claims

1. Steering lock for locking the steering spindle (2) of a motor vehicle steering system, **with the following characteristics :**
a) the steering lock comprises a blocking element (5) displaceable in the direction of the longitudinal axis (3) thereof, by means of an electromagnetic drive (6), displaceable from a locking to an unlocking position via a swivelling axis (15), fixed to the casing, and is maintainable in said unlocking position by a securing element (7) in the form of a lever;
b) for the displacement of the blocking element (5), this element is at least supported via a first cam (11) on a first control contour (12) of a drive wheel (10) of the electromechanic drive (6); **characterized in that**
c) the securing element (7) is connected with a second cam (19), which is also supportably mounted on a control contour (12;62) connected with the drive wheel (10) whereby the control contour (12;62) assigned to the securing element (7) exhibits a function, selected in such a way that, after activation of the electromechanical drive (6) for the displacement of the of the blocking element (5) from the unlocking to the locking position, first the securing element (7) is pivoted from the resting position into the release position, and only subsequently is a movement by the blocking element (5) into locked position possible, whereby the pivot (13) of the drive wheel (10) is arranged vertically to the longitudinal axis (3) of the blocking element (5); wherein the second cam (19) of the securing element (7) is supportably mounted on a second control contour (62) separately arranged from the first control contour (12) of the drive wheel (10) assigned to the blocking element (5), wherein the first control contour (12) and the second control contour (62) are arranged on opposing sides (60, 61) of the drive wheel (10), and wherein the securing element (7) on one of its ends comprises a locking part (17), which is formed as a substantially L-shaped journal, and wherein the locking part (17), for the securing of the blocking element (5) can be swivelled into its unlocking position under a heelshaped projection (18) of the blocking element

2. Steering lock according to Claim 1, **characterized in that** the swivelling axis (15) of the securing element (7) is arranged parallel to the pivot (13) of the drive wheel (10).

3. Steering lock according to Claims 1 or 2, **characterized in that** the first control contour (12) of the drive wheel (10) exhibits two curved portions (14, 21), whereby the first curved portion (14) has a constant radial distance from the pivot (13) of the drive wheel (10) and the second curved portion (21) exhibits a sloping run from the first curved portion to the pivot (13) of the drive wheel (10), and the radial distance of the first curved portion (14) is selected in such a way, that when the first cam is supported by this curved portion (14), the blocking element (5) has reached its unlocking position and that the length of this curved portion (14) is selected in such a way that during the locking procedure the first cam (11) is supported by the curved portion (14) until the second cam (19) has pivoted the securing element (5) from its resting position into its release position.

4. Steering lock according to Claim 3, **characterized in that** the second control contour (21) reaches to the immediate proximity of the pivot (13) of the drive wheel (10).

5. Steering lock according to Claim 1, **characterized in that** the second control contour (62) of the drive wheel (10) exhibits a second curved portion (64), formed in such a way that with the supporting of the second cam (19) on this curved portion, the securing element (7) is pivoted from its resting position to its release position.

6. Steering lock according to one of the Claims 1 through 5, **characterized in that** the blocking element (5) comprises a bolt-shaped lower section (50), and a substantially bracket-shaped upper section (51) that connects with the lower section (50), whereby at least a partial area of the arm (52) of the upper section (51), located across from the bolt-shaped lower section (50, is embodied as the first cam (11).

7. Steering lock according to one of the Claims 1 through 6, **characterized in that** the drive wheel (10) is a gear of the electromechanic drive (6).

8. Steering lock according to Claim 7, **characterized in that** the gear (10) is a worm gear of a worm gear drive.

## Revendications

1. Dispositif antivol pour le verrouillage de la colonne de direction (2) d'un équipement de direction d'un véhicule automobile ayant les caractéristiques suivantes :
a) le dispositif antivol (1) comprend un verrou (5) déplaçable dans la direction de son axe longitudinal (3) qui est apte à être actionné, au moyen d'un entraînement électromécanique (6), d'une position de verrouillage vers une position de déverrouillage, et qui, dans la position de déverrouillage, est apte à être bloque par un élément d'arrêt (7) en forme de levier pivotant autour d'un axe de pivotement (15) solidaire du boîtier d'une position de repos vers une position de déblocage ;
b) pour le déplacement du verrou (5), celui-ci prend appui, par l'intermédiaire d'une première came (11), sur un premier profil de commande (12) d'une roue d'entraînement (10) d'un entraînement électromécanique (6), **caractérisé en ce que** :
c) l'élément d'arrêt (7) est relié à une deuxième came (19), également disposée de manière à pouvoir prendre appui sur un profil de commande (12 ; 62) relié à la roue d'entraînement (10), le profil de commande (12 ; 62) associé à l'élément d'arrêt (7) associé présentant un tracé choisi de manière que, dans un premier temps, après activation de l'entraînement électromécanique (6) pour le déplacement du verrou (5) de la position de déverrouillage vers la position de verrouillage, l'élément d'arrêt (7) pivote de sa position de repos vers sa position de déblocage avant que le verrou (5) puisse se déplacer vers la position verrouillée, l'axe de rotation (13) de la roue d'entraînement (10) étant disposé perpendiculairement à l'axe longitudinal (3) du verrou (5) ; dans lequel la deuxième came (19) de l'élément d'arrêt (7) est disposée de manière à pouvoir prendre appui sur un deuxième profil de commande (62) disposé séparément du premier profil de commande (12), dans lequel le premier profil de commande (12) et le deuxième profil de commande (62) sont disposés sur les faces (60, 61) opposées de la roue d'entraînement (10) et dans lequel l'élément d'arrêt (7) comprend, à l'une de ses extrémités, une pièce de blocage (17) formée par une branche sensiblement en forme de L, et dans lequel la pièce de blocage (17) est apte à pivoter sous une saillie (18) en forme de gradin du verrou (5) pour bloquer le verrou (5) dans sa position de déverrouillage.

2. Dispositif antivol selon la revendication 1, **caractérisé en ce que** l'axe de pivotement (15) de l'élément d'arrêt (7) est disposé parallèlement à l'axe de rotation (13) de la roue d'entraînement (10).

3. Dispositif antivol selon l'une des revendications 1 ou 2, **caractérisé en ce que** le premier profil de commande (12) de la roue d'entraînement (10) comporte deux portions de courbe (14, 21), première portion de courbe (14) présentant un distance radial constante par rapport à l'axe de rotation (13) de la roue d'entraînement (10) et la deuxième portion de courbe (21) présentant un tracé descendant par rapport à la première portion de courbe (14) en direction de l'axe de rotation (13) de la roue d'entraînement (10), et **en ce que** la distance radiale de la première portion de courbe (14) est choisie de manière qu'au cours de l'opération de verrouillage, la première came (11) prenne appui sur la portion de courbe (14) jusqu'à ce que l'élément d'arrêt (7) ait pivoté de sa position de repos vers sa position de déblocage sous l'action de la deuxième came (19).

4. Dispositif antivol selon la revendication 3, **caractérisé en ce que** la deuxième portion de courbe (21) s'étend jusqu'à proximité immédiate de l'axe de rotation (13) de la roue d'entraînement (10).

5. Dispositif antivol selon la revendication 3 prise en combinaison avec la revendication 6, **caractérisé en ce que** le deuxième profil de commande (62) de la roue d'entraînement (10) présente une deuxième portion de courbe (64) réalisée de manière à entraîner le pivotement de l'élément d'arrêt (7) de sa position de repos vers sa position de déblocage lorsque la deuxième came (19) prend appui sur cette portion de courbe (64).

6. Dispositif antivol selon l'une des revendications 1 à 5, **caractérisé en ce que** le verrou (5) comprend une partie inférieure (50) en forme d'axe et une partie supérieure (51) sensiblement en forme d'étrier et faisant suite à la partie inférieure (50), une section partielle au moins du bras (52) de la partie supérieure (51) faisant face à la partie inférieure (50) en forme d'axe étant réalisée comme première came (11).

7. Dispositif antivol selon l'une des revendications 1 à 6, **caractérisé en ce que** la roue d'entraînement (10) est une roue dentée de l'entraînement électromécanique (6).

8. Dispositif antivol selon la revendication 7, **caractérisé en ce que** la roue dentée (10) est la roue d'une vis sans fin d'un entraînement à vis sans fin.
